# EUROPÄISCHE PATENTANMELDUNG

(11) **EP 1 530 117 A1**
(43) Veröffentlichungstag der Anmeldung: **11.05.2005**
(21) Anmeldenummer: 03405796.8
(22) Anmeldetag: 06.11.2003
(51) Int. Cl.: G06F 1/16

(54) **Modularer Flachbildschirm**

(71) Anmelder: Dicom AG, 6343 Rotkreuz (CH)
(72) Erfinder: Ronchetti, Andreas, 6319 Allenwinden (CH)
(74) Vertreter: RUTZ ISLER & PARTNER

(57) **Zusammenfassung**

Der modulare Flachbildschirm (1) weist ein erstes Gehäuse (11) mit einer Anzeigeeinheit (15) und wenigstens einer Treibereinheit (13) sowie ein zweites Gehäuse (2) auf, das der der Aufnahme wenigstens der Hauptbaugruppe (31) eines Computers (3) dient, der mit der Treibereinheit (13) verbindbar ist. Erfindungsgemäss ist die Hauptbaugruppe (13) mit der am ersten Gehäuse (11) anliegenden Grundplatte (211) des zweiten Gehäuses (2) lösbar verbunden, wobei die Grundplatte (211) mit Öffnungen (216) versehen ist, durch die Montageschrauben (51, 52) führbar sind, mittels derer das zweite Gehäuse (2) mit der tragenden Struktur (12) des Flachbildschirms (1) verbindbar ist.

## Beschreibung

Die vorliegende Erfindung betrifft einen modularen Flachbildschirm nach dem Oberbegriff des Patentanspruchs 1.

Auf dem Markt erhältliche Flachbildschirme, die auf der Flüssigkristall-, Plasma-, oder Elekrolumineszenz-Technologie basieren, weisen im wesentlichen eine mit Glassubstraten und einer Pixelmatrix versehene Anzeigeeinheit mit einer Bildschirmdiagonale von bis zu 100 cm, eine mit einer Leiterplatte versehene Treibereinheit und ein Gehäuse auf.

Der Aufbau eines solchen Flachbildschirms ist in [1], EP 1 265 210 A1 beschrieben. Dort ist ferner angegeben, dass die Daten der darzustellenden Bilder dem Treibermodul beispielsweise über einen Datenbus von einer externen Datenquelle zuführbar sind.

Aus [2], WO 02/25943 ist ferner ein als Multimedia-Wiedergabegerät ausgebildeter Flachbildschirm bekannt, in dem die für die Verarbeitung eines Fernsehsignals notwendigen Module sowie die Module eines Personalcomputers integriert sind. Der Anwender kann daher wahlweise ein demoduliertes Fernseh- oder ein von den Personalcomputer-Modulen abgegebenes Videosignal auf der Anzeigeeinheit darstellen.

Bei nicht mit Personalcomputer-Modulen versehenen Flachbildschirmen, die in Ausstellungen oder in Hallen als Informationstafeln dienen und die dazu mittels einer Montagevorrichtung montiert sind, werden oft Personalcomputer im Notebook-Format angehängt, um computergenerierte Daten oder Bilder darzustellen. Die Personalcomputer werden dazu am Flachbildschirm oder an der Montagevorrichtung befestigt, beispielsweise mittels Riemen angeschnallt.

Aus [3], EP 1 244 000 A2 ist ferner bekannt, eine als Schubladenfach ausgebildete Halterung für einen Personalcomputer vorzusehen, die lösbar mit der Rückseite eines Flachbildschirms verbindbar ist. Das Schubladenfach weist dazu birnenförmige Ausnehmungen auf, die in nagelkopfförmige Befestigungselemente eingehängt werden können, die an der Rückseite des Flachbildschirms vorgesehen sind. Der Flachbildschirm kann daher modular mit dem Schubladenfach für den Personalcomputer verbunden werden. Bei der Verbindung des Flachbildschirms mit einer Befestigungsvorrichtung kann das derart montierte Schubladenfach jedoch störend in Erscheinung treten. Eine Montage des normalerweise sehr schweren Flachbildschirms durch Verbindung des Schubladenfachs mit der Befestigungsvorrichtung ist nicht möglich, weil sich der Flachbildschirm lösen würde. Der Flachbildschirm ist daher an anderer Stelle mit einer entsprechend ausgestalteten Befestigungsvorrichtung zu verbinden, mittels der der Flachbildschirm schwebend gehalten werden kann. Dabei sollen Elemente der Befestigungsvorrichtung natürlich nicht störend in Erscheinung treten.

Ferner ist die Verwendung eines Schubladenfachs mit weiteren Nachteilen verbunden. Einerseits resultieren durch das Einschieben einer Computerkarte in das Schubladenfach und in den Verbindungsstecker gegebenenfalls störende mechanische Spannungen. Andererseits können mangelhafte elektrische Verbindungen resultieren, wenn die Computerkarte nicht korrekt eingeführt wird.

Der vorliegenden Erfindung liegt daher die Aufgabe zugrunde, einen verbesserten modularen Flachbildschirm zu schaffen.

Insbesondere ist ein modularer Flachbildschirm zu schaffen, an dem ein in einem Gehäuse vorgesehenes Computermodul rasch montiert oder demontiert werden kann.

Ferner soll der Flachbildschirm mit oder ohne Computermodul in gleicher Weise, ohne zusätzlichen Aufwand stabil mit einer Montagevorrichtung verbindbar sein.

Diese Aufgabe wird mit einem modularen Flachbildschirm gelöst, welcher die in Anspruch 1 angegebenen Merkmale aufweist. Vorteilhafte Ausgestaltungen der Erfindung sind in weiteren Ansprüchen angegeben.

Der modulare Flachbildschirm weist ein erstes Gehäuse mit einer Anzeigeeinheit und wenigstens einer Treibereinheit sowie ein zweites Gehäuse auf, das der der Aufnahme wenigstens der Hauptbaugruppe eines Computers dient, der mit der Treibereinheit verbindbar ist.

Erfindungsgemäss ist die Hauptbaugruppe mit der am ersten Gehäuse anliegenden Grundplatte des zweiten Gehäuses lösbar verbunden, wobei die Grundplatte mit Öffnungen versehen ist, durch die Montageschrauben führbar sind, mittels derer das zweite Gehäuse mit der tragenden Struktur des Flachbildschirms verbindbar ist.

Dadurch resultieren eine stabile Montage der Computerbaugruppe im zweiten Gehäuse sowie eine stabile Verbindung des ersten und des zweiten Gehäuses mit der tragenden Struktur des Flachbildschirms.

Die der Montage des zweiten Gehäuses dienenden Montageschrauben weisen vorzugsweise ein mit der tragenden Struktur verbindbares erstes Gewinde und ein Distanzelement auf, das in den Innenraum des zweiten Gehäuses hineinragt oder vollständig durch diesen hindurch tritt und das am anderen Ende mit einem zweiten Gewinde versehen ist, welches der Aufnahme einer zweiten Montageschraube dient, mittels der der Flachbildschirm mit einer Befestigungsvorrichtung verbindbar ist.

Anhand der zweiten Montageschrauben ist die Befestigungsvorrichtung daher in gleicher Weise, entweder direkt mit der tragenden Struktur des Flachbildschirms oder mit den Distanzelementen der ersten Montageschrauben verbindbar, mittels denen das zweite Gehäuse gehalten wird.

Vorzugsweise sind die Distanzelemente der ersten Montageschrauben sechskantige Bolzen, die mit einem Werkzeug erfasst und gedreht werden können. Die ersten Montageschrauben können daher von aussen an den Distanzelementen erfasst und gelöst werden, sofern diese durch entsprechende Öffnungen des zweiten Gehäuses nach aussen geführt oder die Öffnungen genügend gross gewählt sind. Das zweite Gehäuse kann anhand der ersten Montageschrauben daher bequem montiert und demontiert werden.

Die Hauptbaugruppe und/oder mit der Hauptbaugruppe verbindbare Erweiterungskarten oder Laufwerke sind vorzugsweise mit der Grundplatte verschraubt und/oder mittels gegebenenfalls elastischen Stütz- und/oder Führungselementen gehalten.

In vorzugsweisen Ausgestaltungen ist das zweite Gehäuse mit wenigstens einer aufklappbaren Tür, mit einer Schiebetür und/oder mit wenigstens einer schlitzartigen Öffnung versehen, welche der Einführung der Hauptbaugruppe und/oder der Erweiterungskarten, eines oder mehrerer Laufwerke, von Datenträgern oder von Anschlusskabeln dient.

Eine schlitzartige Öffnung ist vorzugsweise an der Unterseite der zweiten Halterung angeordnet und derart ausgestaltet, dass ein optischer Datenträger durch die schlitzartige Öffnung in ein Laufwerk einführbar oder eine der Aufnahme des optischen Datenträgers dienende Schublade des Laufwerks aus der schlitzartigen Öffnung ausfahrbar ist. Bei Flachbildschirmen, die aufgehängt werden, sind Datenträger, CD's oder DVD's daher bequem von unten zuführbar. Sofern der Flachbildschirm auf eine Konsole gestellt wird, werden das oder die Laufwerke seitlich oder oben montiert.

In einer vorzugsweisen Ausgestaltung umfasst die Befestigungsvorrichtung einen Montagebügel mit stab- oder plattenförmigen Elementen, deren Abmessungen entsprechend der zu tragenden Last gewählt und derart ausgestaltet sind, dass die aufklappbaren oder verschiebbaren Türen frei liegen und auch dann betätigt werden können, wenn der Flachbildschirm mit der Befestigungsvorrichtung verbunden ist.

Der Montagebügel bildet dazu vorzugsweise ein nach unten geöffnetes U-Profil, das zwei mit den Distanzelementen verschraubbare, vorzugsweise bogenförmige Seitenelemente aufweist, die mittels eines Zentralelements miteinander verbunden sind. Zwischen den Seitenelementen kann daher eine Schiebetür vorgesehen sein, mittels der der Zugang zum Innenraum des zweiten Gehäuses freigelegt werden kann.

In einer weiteren vorzugsweisen Ausgestaltung ist der Montagebügel, vorzugsweise das Zentralelement, drehbar in der Befestigungsvorrichtung gelagert, so dass der Flachbildschirm für den bequemen Zugriff in den Innenraum des zweiten Gehäuses, beispielsweise für den Ein- oder Ausbau der Hauptbaugruppe, der Erweiterungskarten oder der Laufwerke, nach aussen gekippt und vorzugsweise fixiert werden kann.

Nachfolgend wird die Erfindung anhand von Zeichnungen näher erläutert. Dabei zeigt:
- Figur 1: einen modularen Flachbildschirm 1 mit einem ersten Gehäuse 11 und einem geöffneten zweiten Gehäuse 2, das mittels ersten Montageschrauben 51 mit der tragenden Struktur des Flachbildschirms 1 verbunden ist und in dem ein aus einer Hauptbaugruppe 31 und Erweiterungskarten 32 bestehender Computer 3 angeordnet ist;
- Figur 2: den Computer 3 von Figur 1 mit einem seitlich angeordneten Laufwerk 34 und einer Netzwerkkarte 33, mittels der eine Verbindung zu einer Eingabeeinheit 35 realisierbar ist;
- Figur 3: den Computer von Figur 2 mit dem unterhalb der Hauptbaugruppe 31 angeordneten Laufwerk 34, das eine nach unten ausfahrbare Schublade 341 aufweist;
- Figur 4: den mit einer Befestigungsvorrichtung 6 verbundenen Flachbildschirm 1 von Figur 1 ohne das zweite Gehäuse 2;
- Figur 5: den Flachbildschirm 1 mit der Befestigungsvorrichtung 6 von Figur 4 von der Seite gesehen;
- Figur 6: den Flachbildschirm 1 von Figur 1 mit geschlossenem zweitem Gehäuse 2;
- Figur 7: den Flachbildschirm 1 von Figur 6 verbunden mit der Befestigungsvorrichtung 6 von Figur 4, von der Seite gesehen;
- Figur 8: den Flachbildschirm 1 von Figur 6 mit in Schnitt dargestelltem ersten und zweitem Gehäuse 11, 2 und der schematischen Darstellung der tragenden Struktur 12 des Flachbildschirms 1;
- Figur 9: eine erste und eine zweite Montageschraube 52, 65;
- Figur 10: den mit einem Montagebügel 64' verbundenen, modularen Flachbildschirm 1 von Figur 1 mit einem zweiten Gehäuse 2, welches eine vom Montagebügel 64' teilweise umrahmte Schiebetür 224 aufweist;
- Figur 11: den mit der Befestigungsvorrichtung 6 verbundenen modularen Flachbildschirm 1 von Figur 10 in Betriebsposition; und
- Figur 12: den mit der Befestigungsvorrichtung 6 verbundenen modularen Flachbildschirm 1 von Figur 10 in Wartungsposition.

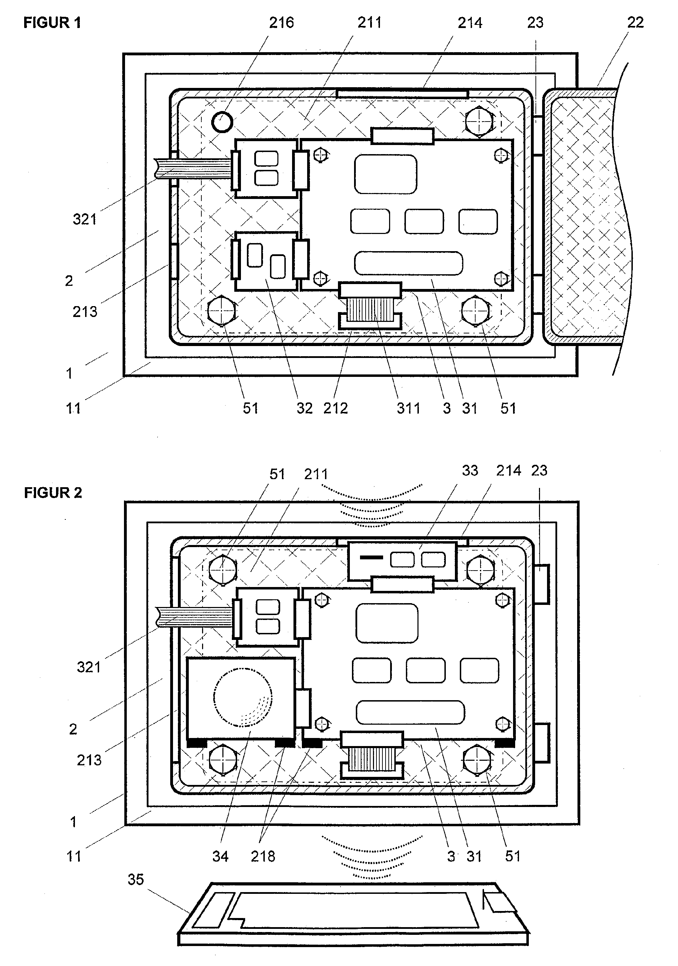

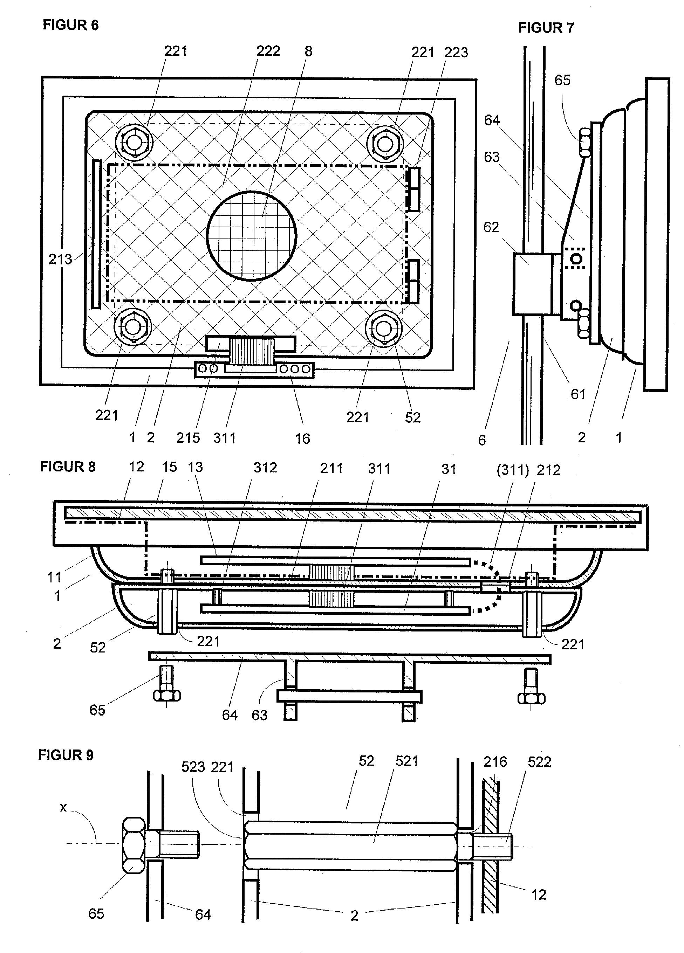

Figur 1 zeigt die Rückseite eines erfindungsgemässen Flachbildschirms 1 mit einem ersten Gehäuse 11 und einem geöffneten zweiten Gehäuse 2, in dem die Hauptbaugruppe 31 eines Computers 3, ein so genanntes Mainboard, mit zwei daran angeschlossenen Erweiterungskarten 32 montiert ist. Das zweite Gehäuse 2 weist eine am ersten Gehäuse 11 anliegende Grundplatte 211 auf, die mit vier runden Öffnungen 216 versehen ist, durch die erste Montageschrauben 51 führbar sind, mittels denen das zweite Gehäuse 2 mit der tragenden Struktur 12 (siehe Figur 8 und Figur 9) des Flachbildschirms 1 stabil verbindbar ist. Das zweite Gehäuse 2 weist eine mittels Scharnieren 23 drehbar gelagerte Tür 22 auf, die nach rechts aufgeklappt ist und Zugang zum Computer 3 gewährt.

Die Hauptbaugruppe 31, die mit der Grundplatte 211 stabil verschraubt ist, ist mittels eines Kabels 311, das durch eine Öffnung 212 in der Grundplatte 211 geführt ist, mit Anschlüssen der im ersten Gehäuse 11 vorgesehenen elektronischen Module, beispielsweise mit der Treibereinheit 13 verbunden. Zur Einführung von Kabeln 321 und elektronischen Modulen, Erweiterungskarten und/oder Laufwerken, ist das zweite Gehäuse 2 ferner mit schlitzartigen Öffnungen 213, 214 versehen, welche Zugang zu der Hauptbaugruppe 31 von oben und von der Seite erlauben.

Figur 2 zeigt den Computer 3 von Figur 1 mit einem durch die seitlich vorgesehene Öffnung 213 eingeschobenen und mit der Hauptbaugruppe 31 verbundenen Laufwerk 34, das einen fest montierten Datenträger aufweist und/oder dem Datenträger, beispielsweise CD's oder DVD's zuführbar sind.

Durch die oben vorgesehene Öffnung 214 wurde ferner eine Netzwerkkarte 33 eingeführt, mittels der eine Verbindung zwischen der Hauptbaugruppe 31 und einer Eingabeeinheit 35 realisierbar ist, die ebenfalls eine Netzwerkkarte aufweist und mittels der der Computer 3 und vorzugsweise auch der Flachbildschirm 1 steuerbar sind. Die Netzwerkkarten 33 arbeiten vorzugsweise nach einem Standard, vorzugsweise dem Bluetooth-Standard, der den Aufbau von Ad-hoc-Netzwerken erlaubt. Salutation- und Service Discovery-Verfahren, welche die automatische Anbindung der Eingabeeinheit 35 an den im Flachbildschirm 1 vorgesehenen Computer 3 erlauben, sind in [4], U.S. Offenlegungsschrift US 2002/0120750 A1, beschrieben.

Die Grundplatte 211 des in Figur 2 gezeigten zweiten Gehäuses 2 ist ferner mit Stütz- und/oder Führungselementen 218 versehen, die erlauben, die Einheiten 31, 34 einzuführen und stabil zu halten, ohne diese zu verschrauben.

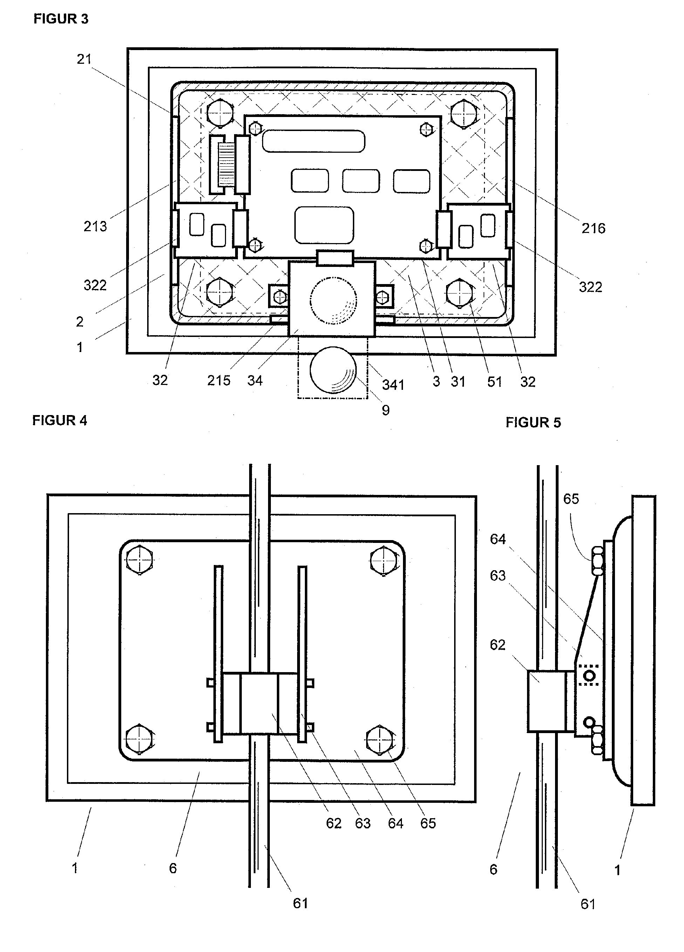

Figur 3 zeigt das zweite Gehäuse 2 mit auf beiden Seiten und unten vorgesehenen schlitzartigen Öffnungen 213, 216 bzw. 215. Unterhalb der Hauptbaugruppe 31 ist ein als Wechseldatenträger dienendes Laufwerk 34 angeordnet, dem Datenträger direkt oder mittels einer aus- und einfahrbaren Schublade 341 zuführbar sind. Die Schublade 341 ist durch die an der Unterseite des zweiten Gehäuses 2 vorgesehene schlitzartige Öffnung 215 ausfahrbar und in der unteren Endlage mit einem Datenträger 9 bestückbar. Sofern der Flachbildschirm 1 mittels einer Befestigungsvorrichtung 6 (siehe Figur 7) aufgehängt ist, erlaubt diese Anordnung und Ausgestaltung des Laufwerks 34 eine bequeme Zufuhr und Entnahme der Datenträger 9.

Figur 4 zeigt den Flachbildschirm 1 von Figur 1, ohne das zweite Gehäuse 2. Anstelle des zweiten Gehäuses 2 ist eine Montageplatte 64 einer Befestigungsvorrichtung 6 montiert, die mittels eines arretierbaren Lagerkörpers 62 entlang einer Stange 61 verschiebbar und drehbar gelagert ist. Der Lagerkörper 62 ist mittels einer Kippvorrichtung 63 mit der Montageplatte 64 verbunden, so dass der Flachbildschirm 1 bedarfsweise geneigt werden kann.

Figur 5 zeigt den Flachbildschirm 1 von Figur 4 von der Seite gesehen.

Figur 6 zeigt den Flachbildschirm 1 mit einem geschlossenen zweiten Gehäuse 2, das mit Durchtrittsöffnungen 221 versehen ist, die axial (siehe Figur 9, Achse x) zu den ersten Montageschrauben 52 angeordnet sind. Die Montageschrauben 52 weisen ein mit der tragenden Struktur 12 verbindbares erstes Gewinde 522, ein Aussengewinde, und ein Distanzelement 521 auf, das in den Innenraum des mit Durchtrittsöffnungen 221 versehenen zweiten Gehäuses 2 hineinragt oder vollständig durch diesen hindurch tritt, und das mit einem zweiten Gewinde 523, einem Innengewinde, versehen ist, welches der Aufnahme einer zweiten Montageschraube 65 dient, mittels der der Flachbildschirm 1 mit einer Befestigungsvorrichtung 6 verbindbar ist. Der Flachbildschirm 1 ist anhand der Befestigungsvorrichtung 6 daher, mit oder ohne zweites Gehäuse 2, jeweils in gleicher Weise montierbar. Die Befestigungsvorrichtung 6 kann somit direkt (siehe Figur 5) oder, sofern das zweite Gehäuse 2 montiert ist, via die Distanzelemente 521 mit der tragenden Struktur 12 des Flachbildschirms 1 verbunden werden (siehe Figur 7).

Das zweite Gehäuse 2 des Flachbildschirms 1 weist ferner eine mittels Scharnieren 223 gehaltene Klapptür 222 auf, durch die ein Zugriff zum Computer 3 bzw. in den Innenraum des zweiten Gehäuses 2 möglich ist. Vorzugsweise oder alternativ sind die Scharniere 223 derart ausgestaltet, dass die Klapptür 222 auch ausgehängt werden kann. Dadurch kann die Klapptür 222 auch beseitigt werden, wenn die Befestigungsvorrichtung 6 das Aufklappen verhindert. Durch die schlitzartige Öffnung 215 an der Unterseite des zweiten Gehäuses 2 sind die Anschlusskabel 311 des Computers 3 herausgeführt und mit Kontakten einer Anschlussleiste 16 des Flachbildschirms 1 verbunden, die alternativ auch für einen externen Computer verwendbar ist. Wie in Figur 7 gezeigt kann das zweite Gehäuse 2, gegebenenfalls dessen Klapptür 222 mit einem Ventilator 8 versehen sein.

Figur 8 zeigt den modularen Flachbildschirm 1 von oben mit aufgeschnittenem ersten und zweiten Gehäuse 11, 2. Im ersten Gehäuse 11 sind die Treibereinheit 13 und die Anzeigeeinheit 15 des Flachbildschirms 1 angeordnet. Das zweite Gehäuse 2 ist mittels der ersten Montageschrauben 52, die durch die Durchtrittsöffnungen 221 nach aussen geführt sind, mit der tragenden Struktur 12 des Flachbildschirms 1 verbunden. Wie in Figur 8 gezeigt, kann die Montageplatte 64 der Befestigungsvorrichtung 6 mittels der zweiten Montageschrauben 65 befestigt werden, die in das Innengewinde 523 der Distanzelemente 521 der ersten Montageschrauben 52 eindrehbar sind (siehe auch Figur 9).

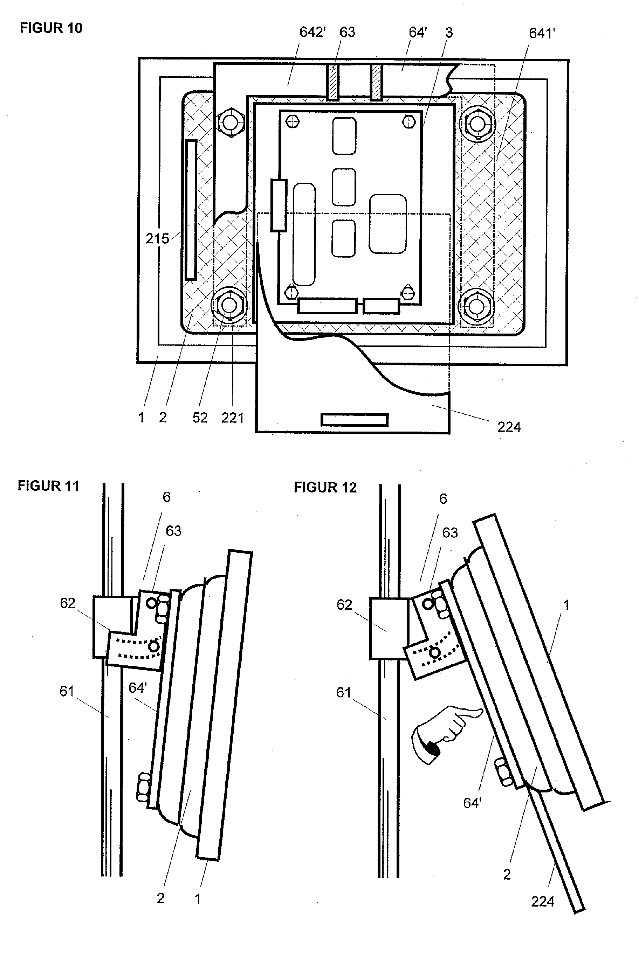

Figur 10 zeigt den mit einem Montagebügel 64' verbundenen, modularen Flachbildschirm 1 von Figur 1 mit einem zweiten Gehäuse 2, welches eine vom Montagebügel 64' teilweise umrahmte, nach unten gezogene Schiebetür 224 aufweist. Die Schiebetür 224 kann daher auch nach der Installation des Flachbildschirms 1 bequem betätigt werden; so dass jederzeit ein bequemer Zugriff zu den Einheiten des Computers 3 möglich ist. Der anstelle der Montageplatte 64 verwendete Montagebügel 64' bildet ein nach unten geöffnetes U-Profil, das zwei mit den Distanzelementen 521 verschraubbare Seitenelemente 641' aufweist, die mittels eines Zentralelements 642' miteinander verbunden sind. Die Seitenelemente 641' und das Zentralelement 642' sind vorzugsweise bogenförmig ausgestaltet, so dass ein optimaler Zugriff zu den Einheiten des Computers 3 möglich ist.

Wie in den Figuren 11 und 12 gezeigt, wird der Montagebügel 64', vorzugsweise das Zentralelement 642', drehbar in der Befestigungsvorrichtung 6 gelagert, so dass der Flachbildschirm 1 nach vorn und/oder nach hinten geneigt werden kann. Dadurch kann eine optimale Neigung für den Betrachter des Flachbildschirms 1 oder für den Techniker eingestellt werden, der mit der Wartung des Computers 3 beauftragt ist. In Figur 1 ist gezeigt, dass die Unterseite des Flachbildschirms 1 nach vorn gedreht werden kann, so dass, nach Abzug, Aufklappen oder Aushängen der Tür 222, 224 der Innenraum des zweiten Gehäuses 2 frei zugänglich ist.

Der erfindungsgemässe Flachbildschirm 1 wurde in bevorzugten Ausgestaltungen beschrieben und dargestellt. Anhand der erfindungsgemässen Lehre sind jedoch weitere fachmännische Ausgestaltungen realisierbar. Insbesondere sind verschiedene Ausgestaltungen der Befestigungsvorrichtung 6 und des zweiten Gehäuses 2 realisierbar. Vorzugsweise ist dieses kastenförmig ausgestaltet und vorzugsweise stufenlos an das erste Gehäuse 11 angepasst. Ferner sind die Ausgestaltung und Anzahl von Türen und Öffnungen den jeweiligen Bedürfnissen anzupassen. Ebenso sind Wege zur Belüftung des ersten und zweiten Gehäuses entsprechend vorzusehen. Wenigstens ein Ventilator 8 kann dazu am ersten oder zweiten Gehäuse vorgesehen werden.

### Literaturverzeichnis:

[1] Europäische Offenlegungsschrift EP 1 265 210 A1
[2] Internationale Offenlegungsschrift WO 02/25943
[3] Europäische Offenlegungsschrift EP 1 244 000 A2
[4] U.S. Offenlegungsschrift US 2002/0120750 A1

## Patentansprüche

1. Modularer Flachbildschirm (1) mit einem ersten Gehäuse (11), in dem eine Anzeigeeinheit (15) und wenigstens eine Treibereinheit (13) vorgesehen sind und mit einem zweiten Gehäuse (2), das der der Aufnahme wenigstens einer Hauptbaugruppe (31) eines Computers (3) dient, die mit der Treibereinheit (13) verbindbar ist, **dadurch gekennzeichnet, dass** die Hauptbaugruppe (31) mit der am ersten Gehäuse (11) anliegenden Grundplatte (211) des zweiten Gehäuses (2) lösbar verbunden ist und dass die Grundplatte (211) mit Öffnungen (217) versehen ist, durch die erste Montageschrauben (51; 52) geführt sind, mittels derer das zweite Gehäuse (2) mit der tragenden Struktur (12) des Flachbildschirms (1) verbindbar ist.

2. Modularer Flachbildschirm (1) nach Anspruch 1, **dadurch gekennzeichnet, dass** die ersten Montageschrauben (52) ein mit der tragenden Struktur (12) verbindbares erstes Gewinde (522), und ein Distanzelement (521) aufweisen, das in den Innenraum des mit Durchtrittsöffnungen (221) versehenen zweiten Gehäuses (2) hineinragt oder vollständig durch diesen hindurch tritt und das mit einem zweiten Gewinde (523) versehen ist, welches der Aufnahme einer zweiten Montageschraube (65) dient, mittels der der Flachbildschirm (1) mit einer Befestigungsvorrichtung (6) verbindbar ist, so dass diese in gleicher Weise, ohne Montage des zweiten Gehäuses (2), direkt mit der tragenden Struktur (12) oder, mit Montage des zweiten Gehäuses (2), mit den Distanzelement (521) verbindbar ist.

3. Modularer Flachbildschirm (1) nach Anspruch 1 oder 2, **dadurch gekennzeichnet, dass** die Hauptbaugruppe (31), und/oder mit der Hauptbaugruppe (31) verbindbare Erweiterungskarten (32 33) oder Laufwerke (34) mit der Grundplatte (211) verschraubt und/oder mittels Stützund/oder Führungselementen (218) gehalten sind.

4. Modularer Flachbildschirm (1) nach Anspruch 3, **dadurch gekennzeichnet, dass** die Grundplatte (211) mit wenigstens einer Öffnung (212) versehen ist, durch die mit der Treibereinheit (13) oder weiteren Einheiten des Flachbildschirms (1) verbindbare Anschlusskabel (311) oder Anschlussstecker durchführbar sind oder, dass das Anschlusskabel (311) durch eine weitere Öffnung (215) aus dem zweiten Gehäuse (22) hinaus führbar und mit am Flachbildschirm (1) aussen liegenden Anschlusskontakten (15) verbindbar ist.

5. Modularer Flachbildschirm (1) nach Anspruch 3 oder 4, **dadurch gekennzeichnet, dass** das zweite Gehäuse (2) mit wenigstens einer aufklappbaren und/oder aushängbaren Tür (22; 222), mit einer Schiebetür (224) und/oder mit wenigstens einer schlitzartigen Öffnung (213; 214; 215; 216) versehen ist, welche die Einführung der Hauptbaugruppe (31) und/oder der Erweiterungskarten (32, 33), Laufwerke (34), Datenträger (9) oder Anschlusskabel (321) erlauben.

6. Modularer Flachbildschirm (1) nach Anspruch 4, **dadurch gekennzeichnet, dass** die schlitzartige Öffnung (215) an der Unterseite der zweiten Halterung (2) angeordnet und derart ausgestaltet ist, dass ein optischer Datenträger (9) durch die schlitzartige Öffnung (218) in das Laufwerk (34) einführbar oder eine der Aufnahme des optischen Datenträgers (9) dienende Schublade (341) des Laufwerks (34) aus der schlitzartigen Öffnung (218) ausfahrbar ist.

7. Modularer Flachbildschirm (1) nach einem der Ansprüche 2 bis 6, **dadurch gekennzeichnet, dass** die Befestigungsvorrichtung (6) eine Montageplatte (64) oder einen Montagebügel (64') umfasst, die mittels den zweiten Montageschrauben (65) mit den Distanzelementen (521) verbindbar ist, von denen vorzugsweise vier Stück die Ecken eines Rechtecks bilden.

8. Modularer Flachbildschirm (1) nach Anspruch 7, **dadurch gekennzeichnet, dass** der Montagebügel (64') stab- oder plattenförmige Elemente aufweist, deren Abmessungen entsprechend der zu tragenden Last gewählt und die derart ausgestaltet sind, dass die kipp- oder verschiebbare Tür (222; 224) des zweiten Gehäuses (2) frei liegt.

9. Modularer Flachbildschirm (1) nach Anspruch 8, **dadurch gekennzeichnet, dass** der Montagebügel (64') zumindest annähernd ein nach unten geöffnetes U-Profil bildet, das zwei mit den Distanzelementen (521) verschraubbare Seitenelemente (641') aufweist, die mittels eines Zentralelements (642') miteinander verbunden sind.

10. Modularer Flachbildschirm (1) nach Anspruch 8 oder 9, **dadurch gekennzeichnet, dass** der Montagebügel (64'), vorzugsweise das Zentralelement (642'), drehbar in der Befestigungsvorrichtung (6) gelagert ist.
